Europäisches Patentamt

European Patent Office

Office européen des brevets

(19)

(11) Numéro de publication: **0 190 067**
**B1**

(12) **FASCICULE DE BREVET EUROPEEN**

(45) Date de publication du fascicule du brevet: **14.03.90**

(21) Numéro de dépôt: **86400059.1**

(22) Date de dépôt: **13.01.86**

(51) Int. Cl.⁵: **G 01 N 23/18,** G 01 N 9/24,
A 61 B 6/02

(54) Procédé de tomodensitométrie quantitative.

(30) Priorité: **16.01.85 FR 8500600**

(43) Date de publication de la demande:
**06.08.86 Bulletin 86/32**

(45) Mention de la délivrance du brevet:
**14.03.90 Bulletin 90/11**

(84) Etats contractants désignés:
**BE CH DE GB IT LI NL SE**

(56) Documents cités:
**EP-A-0 074 877**
**GB-A-2 045 576**

**NUCLEAR TECHNOLOGY, vol. 27, no. 3,
novembre 1975, pages 442-448; J.E. AYER et al.:
"A Gamma-ray absorptometer for nuclear fuel
evaluation"**

(73) Titulaire: **AEROSPATIALE Société Nationale
Industrielle**
**37, Boulevard de Montmorency**
**F-75781 Paris Cédex 16 (FR)**

(72) Inventeur: **Tron, José**
**La Grande Gravette Salaunes**
**F-33160 St-Medard-en-Jalles (FR)**

(74) Mandataire: **Bonnetat, Christian et al**
**CABINET BONNETAT 23, Rue de Léningrad**
**F-75008 Paris (FR)**

(56) References cited:
**COMPUTERS AND BIOMEDICAL RESEARCH,
vol. 7, 1974, pages 395-419, Academic Press,
Inc., GB; R.A. ROBB et al.: "Three-dimensional
visualization of the intact thorax and contents:
a technique for cross-sectional reconstruction
form multiplanar X-ray views"**

Courier Press, Leamington Spa, England.

**Description**

La présente invention concerne un procédé de tomodensitométrie quantitative.

Quoique non exclusivement, elle s'applique particulièrement bien au contrôle non destructif sans contact de la densité et de l'homogénéité de pièces diverses en matériaux composites ou hybrides. Par "matériaux composites", on désigne ci-après une variété de matériaux généralement de densité peu élevée comportant une phase principale appelée matrice, et une ou plusieurs phases de nature macroscopiquement ou microscopiquement différente, soit chimiquement, soit physiquement (matériaux dopés, matériaux fibreux), tandis que le qualificatif "hydride" se rapporte à des matériaux ou structures comportant des inserts en matériaux isotropes, par exemple des inserts métalliques.

Il est connu depuis longtemps d'utiliser les rayonnements ionisants pour déterminer, soit des épaisseurs, soit des densités de matériaux divers. Plus récemment et grâce aux progrès de l'optoélectronique et des automatismes, des systèmes utilisant les rayonnements X et les techniques de reconstitution d'images ont été mis en oeuvre dans le domaine médical (scanners X, gamma caméra) pour effectuer des tomographies des organes du corps humain. Toutefois, ces appareils ne sont pas des dispositifs de mesure quantitatifs.

Dans l'industries, ces techniques se sont développées presque exclusivement dans la métallurgie pour le contrôle final de structures métallurgiques pour le contrôle final de structures métalliques (fissures, soudures) ou dans l'élaboration des laminés (régulation des machines, épaisseur des coulées, etc . . . ).

A ce jour, il n'existe pas de systèmes adaptés aux besoins de l'industrie des matériaux composites.

On remarquera que le document COMPUTERS AND BIOMEDICAL RESEARCH, Vol. 7, 1974, pages 395—419, Academic Press, Inc. GB; R. A. ROBB et al, décrit un procédé pour la tomodensitométrie quantitative d'une pièce au moyen d'un faisceau de radiations électromagnétiques, qui peut être utilisé industriellement et selon lequel on observe successivement une pluralité de sections de ladite pièce au moyen dudit faisceau et on mesure l'atténuation subie par celui-ci, suivant un processus consistant:

A) à subdiviser fictivement chaque section observée en une pluralité de plages individuelles contiguës présentant une forme carrée ou rectangulaire et réparties en lignes et colonnes parallèles à deux directions rectangulaires, à chacune desquelles plages on associe une inconnue représentant le coefficient d'atténuation linéique de ladite plage vis-à-vis dudit faisceau;

B) à appliquer un mouvement de déplacement relatif pas-à-pas entre chacune desdites sections et ledit faisceau de radiations électromagnétiques, de façon que celui-ci et lesdites plages de la section correspondante prennent une pluralité de positions relatives, le nombre desdites positions relatives étant supérieur à celui desdites plages individuelles;

C) puis, pour chacune de ces positions relatives:

a) à calculer la longueur du parcours dudit faisceau dans chacune desdites plages traversées par celui-ci;

b) à former un terme d'équation S, constitué de la somme des divers produits du coefficient d'atténuation linéique et de ladite longueur du parcours du faisceau, pour chacune des plages traversées par ledit faisceau;

c) à mesurer l'intensité I du faisceau après la traversée des plages correspondantes de la section et à former l'expression ln Io/I, Io étant l'intensité dudit faisceau avant la traversée desdites plages;

d) à former l'équation: ln Io/I = S

D) après quoi, pour l'ensemble desdites positions relatives entre le faisceau et lesdites plages de la section, on rassemble les diverses équations ln Io/I = S, pour en faire un système d'équations que l'on résout pour déterminer la valeur du coefficient d'atténuation linéique de chaque plage de la section.

Dans ce document antérieur, ledit mouvement de déplacement relatif entre chacune desdites sections et ledit faisceau est un moment de rotation. Il en résulte que la longueur du parcours du faisceau n'est pas constante et doit être calculée pour chaque position relative du faisceau par rapport à la section en cours d'examen.

Si l'on désirait construire un dispositif utilisant le principe de ce document, il serait nécessaire de prévoir une capacité de calcul très importante pour ce dispositif. Toutefois, même avec des calculateurs de grande capacité, le processus serait compliqué et industriellement peu exploitable.

La présente invention a pour objet de remédier à cet inconvénient.

A cette fin, selon l'invention, le procédé du type décrit ci-dessus est caractérisé en ce que ledit mouvement de déplacement relatif entre chacune desdites sections et ledit faisceau est un mouvement de translation, dont la direction est, à la fois, orthogonale audit faisceau et parallèle à une côté desdites plages.

Ainsi, la longueur du trajet du faisceau dans lesdites plages et la même de colonne en colonne ou de ligne en ligne, de sorte que l'on peut construire une machine mettant en oeuvre le procédé ci-dessus et ayant le caractère industriel.

Ainsi, il est possible de comparer aisément les différentes valeurs de coefficient d'atténuation linéique obtenues et de déterminer la ou les éventuelles plages de la section présentant un défaut d'homogénéité.

Grâce à 'invention, on peut mesurer industriellement, de façon quantitative et avec une grand précision, les variations de densités à l'intérieur de pièces en matériaux composites ou "hybrides", matériaux qui sont macroscopiquement hétérogènes, mais dont la qualité tient à une distribution homogène des hétérogénéités.

Le procédé selon l'invention permet d'assurer la recherche, la localisation et la mesure des éventuels défauts d'homogénéité des pièces examinées.

Le caractère industriel de l'invention est assuré par la caractéristique ci-dessus permettant de contrôler les pièces dans un minimum de temps. L'automaticité possible de toutes les fonctions est un facteur déterminant du système.

De manière à assurer la rapidité ou dépouillement des résultats, le dispositif mettant en oeuvre le procédé selon l'invention permet de désigner, selon des critères définis à l'avance par les spécifications de besoin du produit à contrôler, les pièces "hors tolérance". On obtient donc directement ce type d'information et dans les cas litigieux (limites extérieures tolérances) on peut en faire l'analyse détaillée.

De préférence, l'invention utilise un faisceau de photons gamma issu de sources radioactives convenablement choisies. Bien entendu, le dispositif mettant en oeuvre l'invention garantit la sécurité en matière de radioprotection et respecte parfaitement les normes en vigueur dans ce domaine (rayonnements ionisants) sans imposer de protection individuelle des opérateurs.

La possibilité, grâce à l'invention, d'une conception simple, relativement à des systèmes tels que les scanners X, en fait un dispositif capable de mesures quantitatives réduisant la partie interprétation à un strict minimum car il n'y a pas de reconstitution d'image; en conséquence, le coût de ce dispositif est sensiblement inférieur à celui d'un scanner.

En opérant de la façon décrite ci-dessus pour une pluralité de sections successives de ladite pièce, on détermine non plus des plages, mais des volumes présentant des défauts d'homogénéité.

Pour effectuer les différents calculs, on met en oeuvre un système de calcul électronique. On communique à celui-ci le schéma de la subdivision de chaque section en plages et la position du faisceau de radiations électromagnétiques. Il est donc capable de déterminer les plages traversées par le faisceau et la longueur du trajet dudit faisceau à l'intérieur de chaque plage. Il établit donc aisément le système d'équations linéaires et peut déterminer les valeurs cherchées des coefficients d'atténuation, plage par plage. Bien entendu, ce système de calcul électronique est avantageusement utilisé pour commander les déplacements relatifs entre les plages d'une section et ledit faisceau, ainsi que pour commander le passage dudit faisceau d'une section à l'autre.

Pour simplifier encore plus les calculs, il est avantageux que, à chaque pas, ledit faisceau passe par le centre d'une ligne ou d'une colonne de plages.

Par ailleurs, pour simplifier la réalisation des systèmes générateur et récepteur du faisceau de radiations électromagnétiques, il est avantageux que les déplacements relatifs entre le faisceau et la pièce soient obtenus par déplacement de ladite pièce, le faisceau restant fixe. Ainsi, le système générateur et le système récepteur sont eux-mêmes fixes et restent parfaitement alignés pendant les mesures. Toutefois, pour examiner des pièces de dimensions différentes et/ou une même pièce sous des orientations différentes, il peut être avantageux que le système générateur et le système récepteur puissent se rapprocher ou s'écarter l'un de l'autre le long dudit faisceau.

Il est souhaitable que ledit trajet fixe du faisceau soit horizontal.

Par ailleurs, le système de calcul électronique mis en oeuvre pour effectuer les différents calculs peut commander les différents déplacements relatifs entre ledit faisceau de radiations électromagnétiques et ladite pièce.

Les figures du dessin annexé feront bien comprendre comment l'invention peut être réalisée. Sur ces figures, des références identiques désignent des éléments semblables.

Les figures 1 et 2 illustrent schématiquement le procédé sur lequel est basée la présente invention.

La figure 3 est une vue en élévation d'une machine pour la mise en oeuvre du procédé selon l'invention.

Les figures 4 et 5 sont respectivement des vues de dessus et de côté de la machine de la figure 3.

Les figures 6 à 9 illustrent le fonctionnement de la machine des figures 3 à 5, conformément à la présente invention.

La figure 10 donne le schéma synoptique d'un système de calcul électronique pour la commande de la machine des figures 3 à 5.

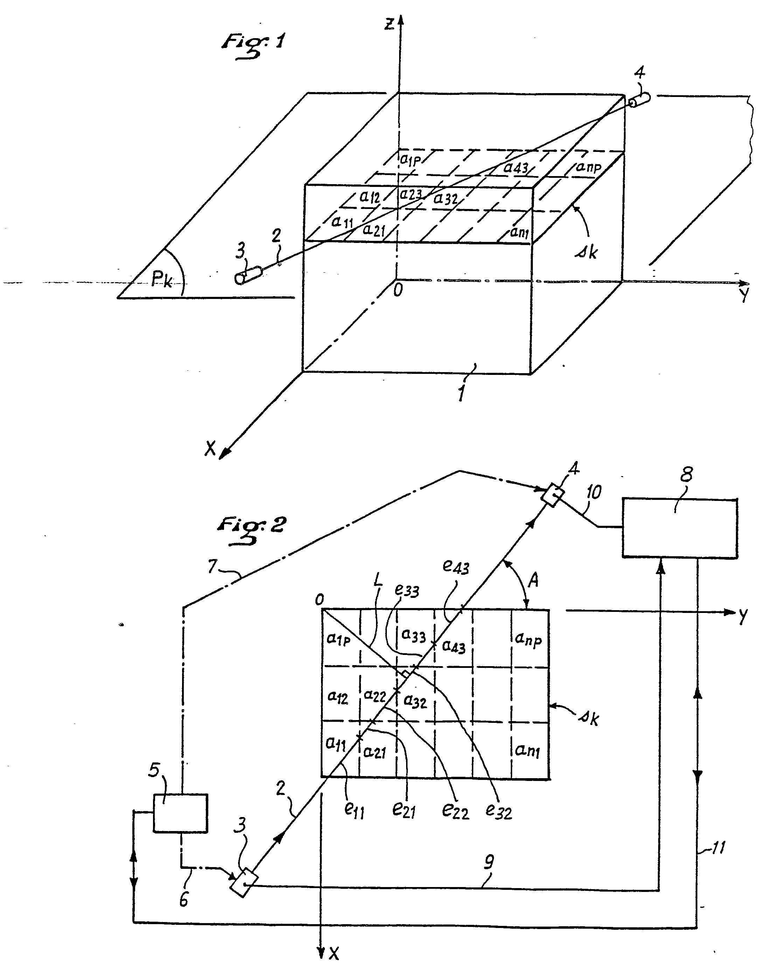

Sur la figure 1, on a représenté en perspective une pièce 1 dont on veut faire la tomodensitométrie quantitative. Intentionnellement, la pièce 1 a été représentée de forme particulièrement simple (parallélépipède), afin de faciliter les dessins et les explications. Il va de soi, cependant, que le procédé de l'invention n'est pas limité à cette forme simple et s'applique quelle que soit la forme de la pièce à contrôler.

La pièce 1 est rapportée à un système d'axes orthogonaux OX, OY, OZ, dont l'origine 0 est confondue avec un sommet de ladite pièce et lesdits axes avec des arêtes de celle-ci. L'examen de la pièce 1 s'effectue dans une pluralité de plans Pk, parallèles au plan OX, OY et orthogonaux à l'axe OZ (avec $k = 1,2,3, \ldots, q$).

Chaque plan Pk détermine dans la pièce 1 une section sk, que l'on observe au moyen d'un faisceau 2 de radiations électro-magnétiques, par exemple des rayons gamma, contenu dans le plan Pk. Le faisceau 2 est émis par un système générateur 3 et reçu par un système récepteur 4. L'intensité du faisceau 2 à la sortie du système générateur 3 est supposée être égale à lo; elle est par exemple exprimée en nombre de photons gamma par seconde.

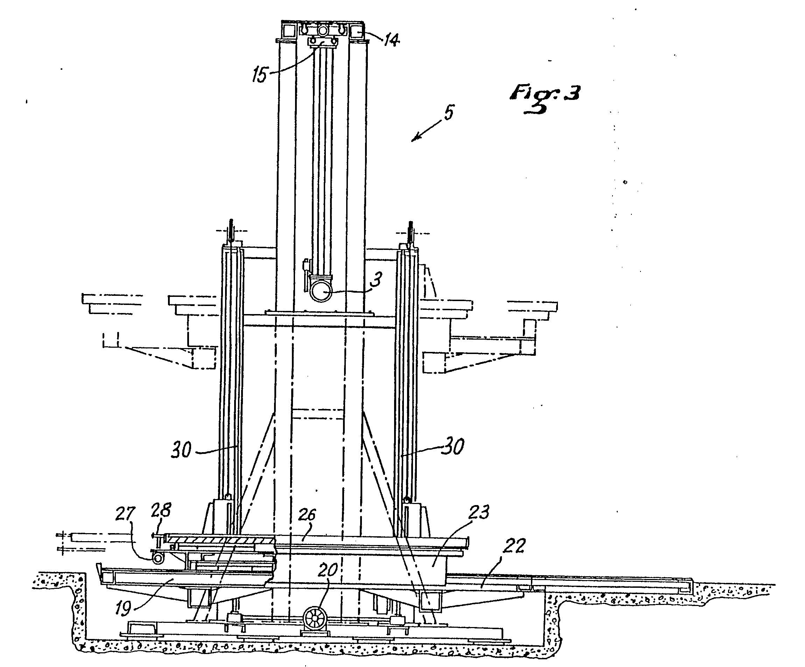

Comme l'illustrent les figures 1 et 2, chaque section sk est subdivisée fictivement en une pluralité n.p. de plages individuelles carrées ou rectangulaires aij (avec $1 \leqslant i \leqslant n$ et $1 \leqslant j \leqslant p$), réparties en lignes et en colonnes parallèlement aux axes OX et OY. A chacune desdites plages aij, on associe une inconnue xij représentant le coefficient d'atténuation linéique de ladite plage, vis-à-vis du faisceau 2.

On prévoit des moyens mécaniques 5 (voir la figure 2) susceptibles de déplacer simultanément les systèmes générateur 3 et récepteur 4 (liaisons 6 et 7), en maintenant ceux-ci alignés, de façon que:

le faisceau 2 puisse être amené dans tout plan Pk désiré, orthogonal à l'axe OZ, afin que ledit faisceau puisse observer toute section sk désirée;

le faisceau 2 puisse explorer chaque section sk, en occupant dans le plan Pk correspondant, une pluralité N de positions relatives différentes par rapport auxdites plages aij (avec $N < n.p.$). Ces différentes positions relatives peuvent être obtenues du fait que lesdits moyens mécaniques 5 font varier l'inclinaison A du faisceau 2 par rapport à l'axe OY autour de l'axe OZ et/ou la distance L du faisceau 2 audit axe OZ.

Dans une section sk, pour chaque position relative entre le faisceau 2 et les plages aij, l'épaisseur de la pièce 1 traversée par le faisceau 2 étant connue:

a) on calcule la longueur eij du parcours du faisceau 2 dans chacune desdites plages aij traversées par celui-ci. Pour ce faire, on prévoit un système de calcul électronique 8 qui connaît la position des systèmes générateur 3 et récepteur 4 (liaisons 9 et 10) et donc l'angle d'inclinaison A et la distance L. De plus, le système de calcul électronique 8 connaît la subdivision de la section sk par les plages aij; il est donc capable de calculer les différentes longueurs eij du parcours du faisceau 2 dans les plages aij.

Dans l'exemple de disposition représenté sur la figure 2, le faisceau 2 traverse les zones a11, a21, a22, a32, a33 et a43. Par suite, le système de calcul électronique 8 qui connaît cette situation par les liaisons 9 et 10, calcule les longueurs de parcours e11, e21, e22, e32, e33 et e43.

b) on forme un terme d'équation S, constitué de la somme des divers produits du coefficient d'atténuation linéique xij et de la longueur eij du parcours du faisceau 2, pour chacune des plages aij traversées par ledit faisceau.

De façon générale, $S = \Sigma\, xij \cdot eij$

Dans l'exemple de la figure 2:

$$S = x11.e11 + x21.e21 + x22.e22 + x32.e32 + x33.e33 + x43.e43$$

Bien entendu, le terme S est formé par le système de calcul électronique 8.

c — on mesure, par le système récepteur 4, l'intensité I du faisceau 2 après la traversée des plages aij correspondantes de la section sk et on adresse la valeur I au système de calcul 8 (liaison 10). Celui-ci calcule alors l'expression

$$\ln \frac{Io}{I}$$

et forme l'équation

$$\ln \frac{Io}{I} = \Sigma\, xij.eij.$$

Ainsi, pour chacune des positions relatives entre le faisceau 2 et les plages aij résultant de l'action des moyens mécaniques 5, on obtient une telle équation. Par suite, si l'on rassemble les N équations déterminées par les N positions relatives du faisceau 2 et des plages aij, on obtient un système d'équations permettant de déterminer (grâce au système de calcul 8), chacune des valeurs inconnues xij.

La comparaison entre ces valeurs xij permet de déterminer la ou les éventuelles places aij correspondant à une valeur xij anormale, donc à une hétérogénéité. On remarquera que la densité dij du matériau de la plage aij est égale à:

$$dij = \frac{xij,}{K},$$

K étant le coefficient d'atténuation massique.

Ce coefficient d'atténuation massique K ne dépend que de l'énergie des photons gamma du faisceau 2 et de la nature élémentaire du matériau de la pièce 1. Par suite, le système de calcul 8 peut facilement calculer les densités dij.

Une laison 11 est prévue entre le système de calcul 8 et les moyens de déplacement mécaniques 5, afin de commander le passage du faisceau 2 d'un plan Pk à un autre et l'exploration de chacune des sections sk.

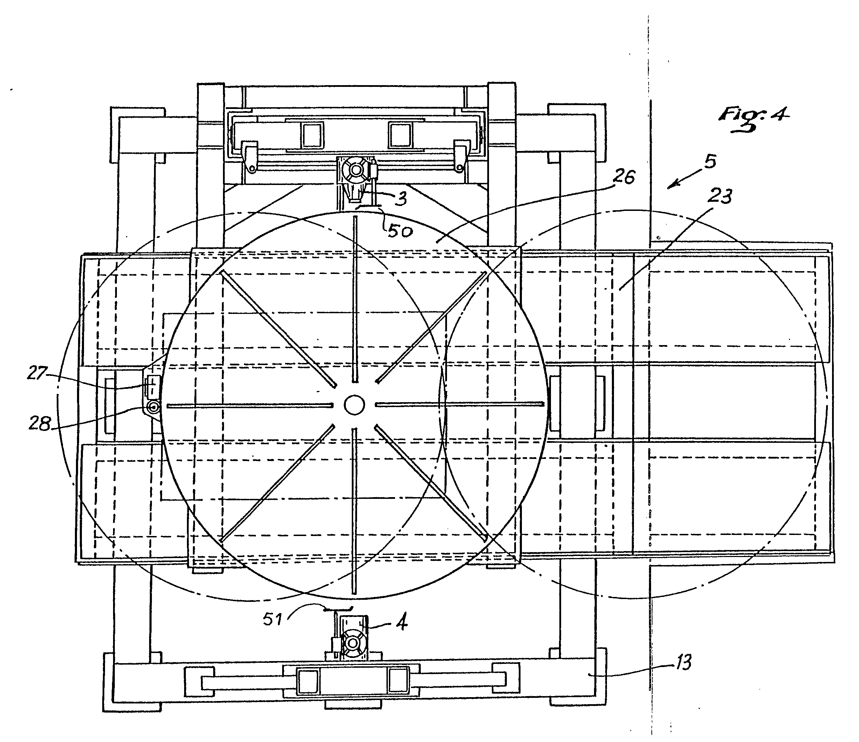

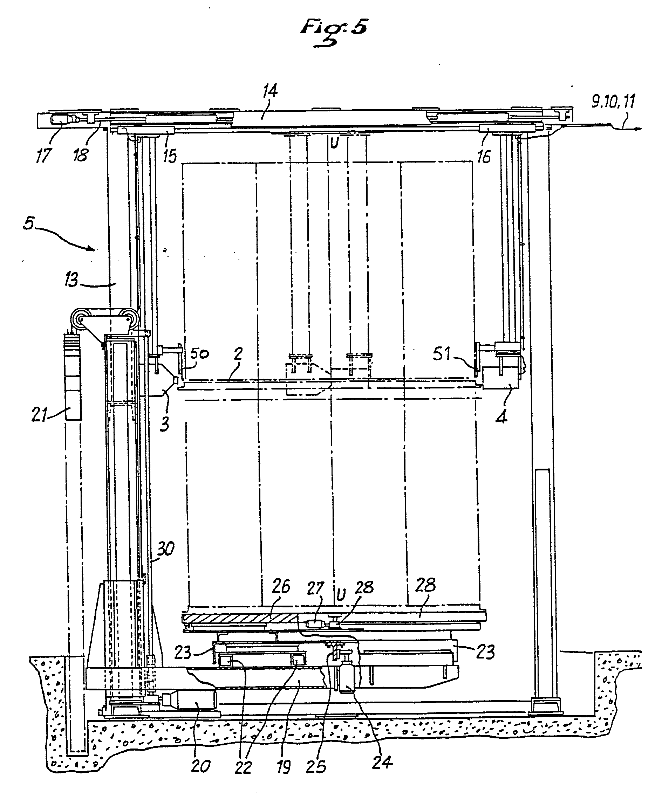

Sur les figures 3, 4 et 5, on a représenté un exemple de réalisation des moyens de déplacement mécaniques 5, du type de ceux décrits dans le document EP—A—0 074 877. Ces moyens comportent un portique 13 pourvu d'une poutre horizontale 14. Sur ladite poutre 14 sont montés coulissant, des chariots 15 et 16 couplés, pouvant se rapprocher ou s'écarter l'une de l'autre, de façon symétrique par rapport à l'axe vertical médian U—U du portique 13. Le système générateur 3 de rayonnements est suspendu au chariot 15, tandis que le système récepteur 4 est suspendu au chariot 16. Ainsi, les systèmes 3 et 4 sont mobiles symétiquement l'un par rapport à l'autre, sous l'action du moteur 17 et de la vis sans fin 18 entraînant les chariots 15 et 16.

Dans une variant de réalisation, lesdits chariots 15, 16 peuvent supporter également un dispositif de mesure des épaisseurs, de la pièce 1, traversées successivement par le faisceau 2. Ledit dispositif de mesure comprend alors des palpeurs 50, 51 permettant la transmission des informations au dispositif de calcul 8.

Les moyens mécaniques 5 comportent de plus un socle horizontal 19 susceptible de se déplacer en translation verticale le long des montants du portique 13, sous l'action d'un moteur 20 et d'une vis sans fin 30. Des contre-poids 21 sont prévus pour faciliter les mouvements verticaux du socle horizontal 19.

Sur le socle horizontal 19, sont prévus des rails horizontaux 22 sur lesquels peut coulisser une table horizontale 23, sous l'action d'un moteur 24 et d'une crémaillère 25.

De plus, sur la table horizontale 23 est monté un plateau 26, rotatif autour d'un axe vertical, sous l'action d'un moteur 27 et d'un entraînement à pignon 28.

Le fonctionnement, conformément à la présente invention, des moyens 5 des figures 3 à 5 est illustré sur les figures 6 à 9.

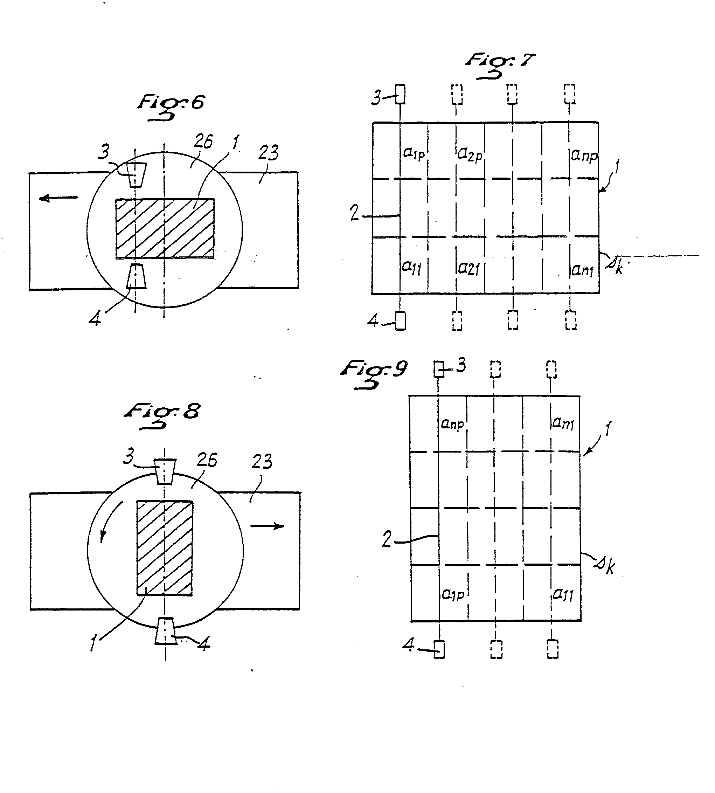

La pièce 1 étant chargée sur le plateau 26, le moteur 20 est actionné pour déplacer verticalement le socle 19 afin que le système générateur 3 et le système récepteur 4 se trouvent au niveau d'une section horizontale sk à observer, de la pièce 1. Ensuite, le moteur 20 est arrêté et le moteur 24 est commandé. La table 23 et le plateau 26 défilent alors horizontalement, pas à pas, entre la source 3 et le détecteur 4 (figure 6). Au premier pas, le faisceau 2 traverse simultanément et centralement les p plages a11, a12, ..., a1p de la section sk (figure 7). Au second pas, ce sont les plages a21, a22,..., a2p qui sont traversées centralement par ledit faisceau, et ... Au nième pas, le faisceau 2 traverse centralement les plages an1, an2, ..., anp.

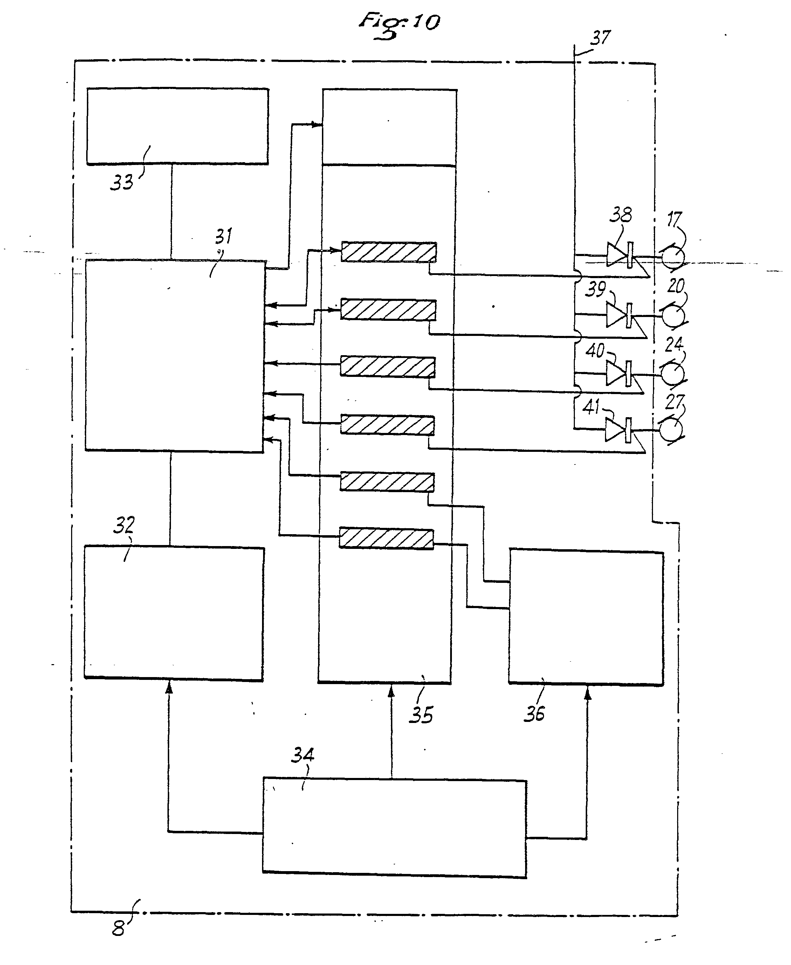

Après ce nième pas, le moteur 27 est actionné et le plateau 26 tourne d'un quart de tour. Puis, le moteur 24 est actionné dans le sens inverse du prédédent (figure 8). La table 23 et le plateau 26 défilent donc horizontalement de nouveau entre la source 3 et le détecteur 4, mais en sens inverse. Au premier pas, le faisceau 2 peut traverser centralement et simultanément les plages a1p à anp, puis au second pas les plages a1(p-1) à an(p-1), etc ... Au pième pas, le faisceau 2 traverse centralement les plages a11 à an1 (figure 9).

L'exemple de réalisation du système de calcul électronique 8, montré par la figure 10, comporte un calculateur 31 associé à un clavier-console 32 et à un dispositif de visualisation 33, un pupitre 34 de mise sous tension, un agencement à blocs mémoire 35, une chaîne de mesure 36 et des interrupteurs commandés 38 à 41, susceptibles de contrôler l'alimentation des différents moteurs 17, 20, 34 et 27, à partir d'une ligne de puissance 37.

L'agencement 35, par exemple du type VME (Versa-Module-Européen) de la société MOTO-ROLA constitue l'organe essentiel du système. Il comporte un ensemble susceptible de recevoir un certain nombre de modules capables d'assurer de façon autonome des fonctions particulières:
    fonction de commande de déplacement,
    fonction de gestion de la chaîne de mesure 36,
    liaison entre le calculateur 31 et la chaîne de mesure 36,
    support de mémoire.

Le calculateur 31 assure principalement les fonctions suivantes:

traitement des mesures — statistiques et corrections,
    construction de la matrice des longueurs de trajets élémentaires du faisceau dans les plages à partir des données géométriques concernant lesdites plages.

La chaîne de mesure 36 assure le traitement des signaux délivrés par le système détecteur 4, constitué, par exemple par un scintillateur-photomultiplicateur — préamplificateur de charge.

Sur la console 32 sont rentrés les paramètres nécessaires à l'exécution de la séquence et aux calculs des épaisseurs traversées (maillage).

Le dispositif de la visualisation 33 peut être utilisé entre autres pour représenter le faisceau 2 et la section de l'objet par le plan horizontal contenant le faisceau ainsi que le maillage.

Le fonctionnement séquentiel du système peut être le suivant:

0) Réglages préliminaires
    on effectue le réglage de la distance générateur 3 — détecteur 4;
    le chargement de la pièce 1 à analyser;
    le chargement de la source du système générateur 3.

1) Mesures préliminaires
    Lorsque la pièce 1 se trouve fixée sur son support 26 et disposée hors du faisceau 2, par l'intermédiaire du clavier de console 32 on procède à une mise à 0 des mémoires actives de l'agencement 35.

On affiche à la console le temps de comptage pour la mesure de l'intensité du faisceau Io. On procède au réglage du seuil de discrimination (spectre visualisé sur l'analyseur multi-canaux) de la chaîne de mesure 36.

On affiche à la console le temps de comptage pour la mesure du bruit de fond (collimateur du générateur 3 obturé).

Les résultats sont mémorisés dans le calculateur.

2) Mesures séquentielles
    La séquence dépend de la nature et de la géométrie de la pièce 1. On peut prévoir d'attribuer à chaque module de l'agencement 35 une certaine autonomie de façon qu'à un module corresponde une fonction. Il suffit alors d'initialiser les différents paramères.
    positionnement dans l'espace
    durée des comptages
    nombre de pas
    et d'afficher la logique séquentielle.

Le comptage est déclenché par un signal logique délivré au moment où la pièce 1 est positionnée, la mesure d'épaisseur étant effectuée.

Dès que le comptage est terminé, un signal logique est délivré et la séquence est poursuivie.

Le calculateur 32 reçoit à travers l'agencement 35, les données géométriques correspondant à la mesure effectuée et les valeurs des comptages.

Il exécute en temps masqué le traitement des mesures (statistiques et corrections) et le calcul des épaisseurs traversées par le faisceau dans chaque plage du maillage, les paramètres géométriques du maillage ayant été introduits au clavier console et mémorisés dans le calculateur.

Les résultats sont adressés à une mémoire de l'agencement 35 et introduits en différé dans l'ordinateur 31 pour calculer les densités relatives ou absolues de chacune des plages du maillage. L'ordinateur est programmé pour désigner les pièces "dans" ou "hors" tolérances.

Le système générateur 3 de radiations électromagnétiques peut comporter:

une source radioactive scellée (élimination des risques de contamination) dont la nature et l'activité sont fonctions de la structure des pièces à analyser. Il répond aux exigences de précision grâce à la faculté à changer:

la nature et l'activité de la source;

la durée et le nombre de mesures.

Cette source est par exemple du cobalt 60.

un blindage de la source assurant un niveau d'exposition inférieur à celui défini par les normes de radioprotection en vigueur.

un collimateur pour obtenir un faisceau gamma de de faible ouverture, dont la géométrie est adaptée à la nature de la structure.

Le système récepteur 4 peut comporter:

un détecteur de photons gamma à forte résolution temporelle et à grande efficacité (scintillateur — semi-conducteur).

un amplificateur et discriminateur rapide, et une échelle de comptage rapide.

La présente invention est particulièrement apte à être utilisée dans l'industrie des matériaux nouveaux (composites: drapés, bobinés, multidirectionnels comportant des fibres dans plus de deux directions, aléatoires, chargés ou dopés ...) pour laquelle la connaissance de l'homogénéité en densité des structures est un facteur essentiel de qualité.

La disponibilité du dispositif mettant en oeuvre le procédé selon l'invention est un avantage important pour le contrôle non-destructif de ladite qualité.

Bien entendu, ce dispositif est adaptable à des structures métalliques ainsi que pour des matériaux "hybrides".

**Revendications**

1. Procédé pour la tomodensitométrie industrielle quantitative d'une pièce (1) au moyen d'un faisceau (2) de radiations électromagnétiques, selon lequel on observe successivement une pluralité de sections (sk) de ladite pièce (1) au moyen dudit faisceau (2) et on mesure l'atténuation subie par celui-ci, suivant un processes consistant:

A) à subdiviser fictivement chaque section observée (sk) en une pluralité de plages individuelles contiguës (aij) présentant une forme carrée ou rectangulaire et réparties en lignes et colonnes parallèles à deux directions (OX, OY) rectangulaires, à chacune desquelles plages on associe une inconnue (xij) représentant le coefficient d'atténuation linéique de ladite plage vis-à-vis dudit faisceau (2);

B) à appliquer un mouvement de déplacement relatif pas-à-pas entre chacune desdites sections (sk) et ledit faisceau (2) de radiations électromagnétiques, de façon que celui-ci et lesdites plages (aij) de la section (sk) correspondante prennent une pluralité de positions relatives, le nombre desdites positions relatives étant supérieur à celui desdites plages individuelles;

C) puis, pour chacune de ces positions relatives:

a) à calculer la longueur (eij) du parcours dudit faisceau (2) dans chacune desdites plages (aij) traversées par celui-ci;

b) à former un terme d'équation S, constitué de la somme des divers produits $(x_{ij} \cdot e_{ij})$ du coefficient d'atténuation linéique $(x_{ij})$ et de ladite longueur (eij) du parcours du faisceau, pour chacune des plages traversées par ledit faisceau;

c) à mesurer l'intensité I du faisceau après la traversée des plages correspondantes de la section et à former l'expression $\ln I_0/I$, $I_0$ étant l'intensité dudit faisceau avant la traversée desdites plages;

d) à former l'équation: $\ln I_0/I = S$

D) après quoi, pour l'ensemble desdites positions relatives entre le faisceau (2) et lesdites plages (aij) de la section (sk), on rassemble les diverses équations $\ln I_0/I = S$, pour en faire un système d'équations que l'on résout pour déterminer la valeur du coefficient d'atténuation linéique (xij) de chaque plage (aij) de la section, caractérisé en ce que ledit mouvement de déplacement relatif entre chacune desdites section (sk) et ledit faisceau (2) est un mouvement de translation, dont la direction est, à la fois, orthogonale audit faisceau et parallèle à un côté desdites plages (aij).

2. Procédé de tomodensitométrie quantitative selon la revendication 1, caractérisé en ce que, à chaque pas, ledit faisceau (2) passe par le centre d'une ligne ou d'une colonne de plages (aij).

3. Procédé de tomodensitométrie quantitative selon l'une quelconque des revendications 1 ou 2, caractérisé en ce que ledit déplacement relatif entre chacune desites section (sk) et ledit faisceau (2) est obtenu par déplacement de ladite pièce (1) par rapport au faisceau (2), qui reste fixe.

4. Procédé de tomodensitométrie quantitative selon l'une quelconque des revendications 1 à 3, caractérisé en ce que l'exploration successive des sections (sk) de la pièce (1) est obtenue par déplacement de ladite pièce (1) par rapport au faisceau (2), qui reste fixe.

**Patentansprüche**

1. Verfahren zur quantitativen industriellen Schwärzungsmessung an Schichten eines Teils (1) mittels eines Strahlenbündels (2) elektromagnetischer Strahlung, bei dem gemäß folgendem Vorgang mit Hilfe des Strahlenbündels (2) nacheinander eine Vielzahl von Abschnitten (sk) des Teils (1) beobachtet und die Schwächung des Strahlenbündels gemessen wird:

A) fiktives Aufteilen jedes beobachteten Abschnitts (sk) in eine Vielzahl von einzelnen sich herüherenden Bereichen (aij) mit quadratischer oder rechteckiger Form, die in zu den beiden rechtwinkligen Richtungen (OX, OY) parallelen Zeilen und Spalten angeordnet sind, wobei jedem dieser Bereiche eine Unbekannte (xij) zugeordnet ist, die den Schwächungskoeffizienten des jeweiligen Bereichs gegenüber dem Strahlenbündel (2) darstellt;

B) Bewirken einer relativen schrittweisen Verschiebungsbewegung zwischen jedem der Abschnitte (sk) und dem Strahlenbündel (2) der elektromagnetischen Strahlung, sodaß dieses und die Bereiche (aij) des entsprechenden Abschnitts (sk) eine Vielzahl von relativen Positionen einnehmen, wobei die Anzahl dieser relativen Positionen größer ist als die der einzelnen Bereiche;

C) dann für jede dieser relativen Positionen:

a) Berechnen der Bahnlänge (eij) des Strahlenbündels (2) in jedem der von ihm durchlaufenen Bereiche (aij);

b) Bilden eines Gleichungsterms S, der aus der Summe der verschiedenen Produkte (xij.eij) des Schwächungskoeffizienten (xij) und der jeweiligen Bahnlänge (aij) des Strahlenbündels für jeden der vom Strahlenbündel durchlaufenen Bereiche gebildet wird;

c) Messen der Intensität I des Strahlenbündels nach Durchlaufen der entsprechenden Bereiche des Abschnitts und Bilden des Ausdrucks ln Io/I, wobei Io die Intensität des Strahlenbündels vor Durchlaufen der Bereiche ist;

d) Aufstellen der Gleichung: ln Io/I = S;

D) danach, für die Gesamtheit der relativen Positionnen zwischen dem Strahlenbündel (2) und den Bereichen (aij) des Abschnitts (sk), Aufstellen der diversen Gleichungen ln Io/I = S zur Bildung eines Gleichungssystems, das zur Bestimmung des Werts des Schwächungskoeffizienten (xij) jedes Bereich (aij) des Abschnitts aufgelöst wird, dadurch gekennzeichnet, daß die relative Verschiebungsbewegung zwischen jedem der Abschnitte (sk) und dem Strahlenbündel (2) eine Translationsbewegung ist, deren Richtung zugleich orthogonal zum Strahlenbündel als auch parallel zu einer Seite der Bereiche (aij) ist.

2. Verfahren zur quantitativen industriellen Schwärzungsmessung nach Anspruch 1, dadurch gekennzeichnet, daß bei jedem Schritt das Strahlenbündel (2) durch den Mittelpunkt einer Zeile oder einer Spalte der Bereiche (aij) läuft.

3. Verfahren zur quantitativen industriellen Schwärzungsmessung nach Anspruch 1 oder 2, dadurch gekennzeichnet, daß die relative Verschiebung zwischen jedem der Abschnitte (sk) und dem Strahlenbündel (2) durch Verschiebung des Teils (1) relativ zum feststehenden Strahlenbündel (2) erzielt wird.

4. Verfahren zur quantitativen industriellen Schwärzungsmessung nach Anspruch 1 bis 3, dadurch gekennzeichnet, daß die aufeinanderfolgende Abtastung der Abschnitte (sk) des Teils (1) durch Verschiebung des Teils (1) relativ zum feststehenden Strahlenbündel (2) erzielt wird.

**Claims**

1. Method for the industrial quantitative tomodensitometry of a work piece (1) by means of an electromagnetic radiation beam (2), in which a plurality of sections (sk) of said work piece (1) are observed successively by means of said beam (2) and the attenuation undergone by this latter is measured, according to a process comprising:

A) each section (sk) observed is subdivided fictitiously into a plurality of individual contiguous zones (aij) having a rectangular or square shape and distributed into lines and columns parallel to two rectangular directions (OX, OY), with each of which zones is associated an unknown (xij) representing the coefficient of attenuation per unit of length of said zone with respect to said beam (2);

B) a relative step by step movement is applied between each of said sections (sk) and said electromagnetic radiation beam (2), so that the latter and said zones (aij) of the corresponding section (sk) take up a plurality of relative positions, the number of said relative positions being greater than that of said individual zones;

C) then, for each of these relative positions:

a) the length (eij) of the path of said beam (2) in each of said zones (aij) through which it passes is calculated;

b) an equation term S is formed, constituted by the sum of the different products (xij.eij) of the coefficient of attenuation per unit of length (xij) multiplied by said length (eij) of the path of the beam, for each of the zones passed through by said beam;

c) the intensity I of the beam is measured after passing through the corresponding zones of the section and the expression in ln Io/I is formed. Io being the intensity of said beam before passing through said zones;

d) the following equation is formed: ln Io/I = S.

D) after which, for the whole of said relative positions between the beam (2) and said zones (aij) of the section (sk), the different equations ln Io/I = S are gathered together so as to form them into a system of equations which is resolved for determining the value of the coefficient of attenuation per unit of length (xij) of each zone (aij) of the section, characterized in that said relative movement between each of said sections (sk) and said beam (2) is a translation movement, the direction of which is both orthogonal to said beam and parallel to one side of said zone (aij).

2. Quantitative tomodensitometry method according to claim 1, characterized in that, at each step, said beam (2) passes centrally through one line or column of zones (aij).

3. Quantitative tomodensitometry method according to claims 1 or 2, characterized in that said relative movement between each of said sections (sk) and said beam (2) is obtained by moving said work piece (1) with respect to the beam (2), which remains fixed.

4. Quantitative tomodensitometry method according to claims 1 to 3, characterized in that the successive scanning of the sections (sk) of the work piece (1) is obtained by moving said work piece (1) with respect to the beam (2), which remains fixed.

EP 0 190 067 B1

Fig. 1

Fig. 2

1

Fig. 3

Fig. 4

Fig. 5

Fig. 6

Fig. 7

Fig. 8

Fig. 9

*Fig. 10*